# EUROPEAN PATENT APPLICATION

(11) **EP 0 558 788 A1**
(43) Date of publication of application: **08.09.1993**
(21) Application number: 92103858.4
(22) Date of filing: 06.03.1992
(51) Int. Cl.: C08G 63/688, C09D 167/06

(54) **Water-soluble, unsaturated polyester resins suitable for preparing water-based paints, and paints prepared from such resins**

(30) Priority: 07.03.1991 IT MI910595
(71) Applicant: SOCIETA ITALIANA RESINE S.I.R. S.p.A., I-20161 Milan (IT)
(72) Inventor: Corrado, Giovanni, I-22073 Fino Mornasco, Como (IT)
(74) Representative: Zumstein, Fritz, Dr.

(57) **Abstract**

(1) Unsaturated polyester resins, characterized in that they contain in their macromolecule:
   (a) from 1 to 15% by weight of monomeric units of formula: 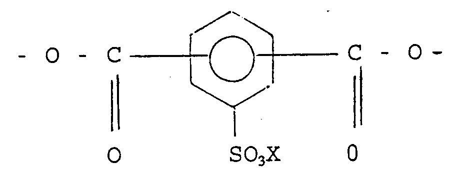 wherein X = Na, Li;
   (b) from 0 to 20% by weight of monomeric units derived from dimethylolpropionic acid and having formula: 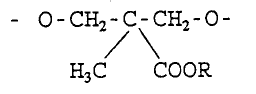 wherein R = H or mono-, di- or tri-alkylammonium group;
   (c) from 99 to 65% by weight of monomeric units deriving from ethylene-glycol and diethylene-glycol, or fumaric and/or itaconic and/or maleic acid, etc..
(2) Paints comprising mixtures in water of said resins with coplymerisable acrylic and/or vinylic monomers.

## Description

The present invention relates to water-soluble, unsaturated polyester resins, and to water-soluble paints prepared by using such resins.

For preparing paints, the use has been long known of polyester resins, which are synthetized by means of the polycondensation reaction of polyvalent alcohols with saturated and/or unsaturated polycarboxy acids, possibly in the presence of polyesterification catalysts, which may be of different types, but usually are constituted by organometallic tin compounds, such as dibutyltin oxide.

So prepared polyester resins are used -- either after being preliminarily diluted with organic solvents or after being neutralized with amines -- as aqueous emulsions.

If said polyesters are diluted with organic solvents, considerable drawbacks from environmental viewpoint arise, because said solvents diffuse into working surroundings.

If said polyesters are neutralized with amines and are subsequently dispersed in water, no solutions, but -- at best -- emulsions are obtained, with drawbacks as regards the aesthetical appearance of the film obtained.

An object of the present invention are water-soluble, unsaturated polyester resins, suitable for preparing water-soluble paints.

A further object of the present invention are the water-soluble paints obtained by using such resins.

The water-soluble, unsaturated polyester resins according to the present invention are characterized in that they contain in their macromolecule:
(a) from 1 to 15% by weight of monomeric units with the following general formula: 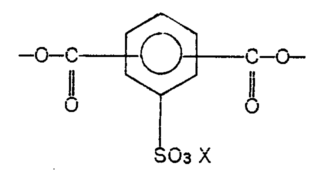 wherein X = Na, Li;
(b) from 0 to 20% by weight of monomeric units derived from dimethylolpropionic acid and having the following formula: 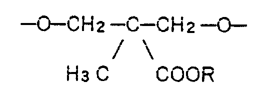 wherein R = H or mono-, di- or tri-alkylammonium group;
(c) from 99 to 65% by weight of monomeric units derived from poly-hydroxy compounds and poly-carboxy acids, of such types, and in such ratios as defined in the following.

The units derived from poly-hydroxy compounds according to point (c) derive from ethylene-glycol and diethylene-glycol, and the ethylene-glycol units content is comprised within the range of from 0 to 70 mol %, based on the total ethylene-glycol and diethylene-glycol units.

The polycarboxy acid units according to (c) derive from fumaric, itaconic and maleic acid (or maleic anhydride), either as individual chemical compounds, or as combinations thereof, and possibly, but not necessarily, also in combination with phthalic anhydride and/or tetrahydrophthalic anydride, and/or isophthalic acid.

The molar ratio of units deriving from polycarboxy acids, including component (a), and units derived from polyhydroxy compounds, including component (b), is, in the polyester resins according to the present invention, comprised within the range of from 0.7:1 to 1.5:1, and preferably is comprised within the range of from 1:1 to 1.2:1.

If the units derived from polycarboxy acids according to (c) also include units different from fumaric, itaconic and maleic acid units, the latter should be contained in amounts of at least 2% based on the total number of monomeric units derived from polycarboxy acids according to (c).

The resins according to the invention, which, in their macromolecule comprise end monomeric units derived from trimethylolpropane-diallyl ether, and having the following formula: 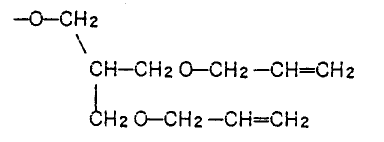
have been shown to be particularly advantageous.

The unsaturated polyester resins according to the present invention display acidity values, expressed as mg of KOH/g of resin, comprised within the range of from 10 to 100, and preferably comprised within the range of from 20 to 60.

The polyester resins according to the invention can be prepared by means of such techniques as usually employed to prepare conventional polyester resins.

In general, said preparation is carried out by polycondensing the above mentioned mixture of polycarboxy acids and polyhydroxy compounds, in molar ratios of from 0.7:1 to 1.5:1 and preferably of from 1:1 to 1.2:1 as stated hereinabove. Said mixture comprises from 1 to 15% by weight of compounds having formula: 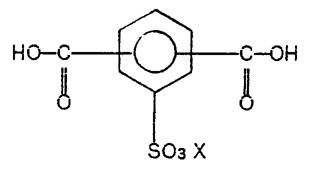
wherein X = Na, Li;
which compounds yield such monomeric units as specified under point (a), and possibly said mixture comprises up to 20% by weight of dimethylolpropionic acid, with formula: 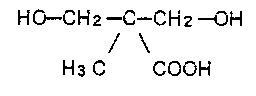
Preferably, the reaction mixture comprises also from 1 to 30% by weight of trimethylolpropane-diallyl ether.

The condensation is carried out at temperatures of from 160°C up to 220°C, in the presence, or less, of usual condensation catalysts, such as, e.g., organometallic tin compounds, such as dibutyltin oxide.

At the end of the condensation, the resin may -- but not necessarily -- be neutralized with an amine, preferably selected from among aliphatic amino-alcohols, such as, e.g., diethanolamine, triethanolamine, 2-amino-2-methyl-1-propanol, 2-dimethylamino-2-methyl-1-propanol, 2-amino-2-ethyl-1,3-propanediol, up to pH values comprised within the range of from 4 to 8.

The polyester resins according to the present invention are suitable, as mentioned above, for preparing water-soluble paints.

Such paints, which are a further object of the present invention, comprise aqueous mixtures of the water-soluble polyester resins as defined above with a water-compatible acrylic and/or vinylic monomer being polymerisable with such a resin. The ratios by weight of polyester resin:acrylic and/or vinylic monomer in said mixtures are comprised within the range of from 95:5 to 40:60, and preferably of from 80:20 to 60:40.

From such monomers, butanediol methacrylate, hydroxypropyl acrylate or methacrylate, hydroxybutyl methacrylate, 2-hydroxyethyl acrylate, 1,6-hexanediol diacrylate, polyethyleneglycol diacrylate, vinylpyrrolidone, may be mentioned herein for exemplifying purposes.

The water-soluble paints according to the invention can be easily obtained by firstly preparing a mixture of the unsaturated polyester resin as defined hereinabove and the acrylic and/or vinylic monomer, in the weight ratios mentioned hereinabove. Such a mixture will preferably, but not necessarily, have a viscosity at 25°C comprised within the range of from 1000 to 100,000 cPs, and most preferably comprised within the range of from 1000 to 50,000 cPs, and a pH value of from 2 to 8.

To such mixture, the usual inhibitors of polymerization of unsaturated polyesters and/or of acrylic or vinylic monomers, such as hydroquinone, toluenehydroquinone, benzoquinone and derivatives thereof, can be added in amounts of from 5 to 500 ppm.

The resulting mixture can be then marketed as such, or it can be directly dissolved in water, in order to obtain a paint in which the ratio by weight of resin mixture to water can be comprised within the range of from 90:10 to 50:50, and preferably of from 80:20 to 60:40, with values of viscosity at 25°C generally -- but not necessarily -- of from 100 to 3000 cPs.

To the aqueous solution obtained in that way, organic and/or inorganic dyes, surfactants, stabilizers and usual ingredients of paints and lacquers, can be added.

The paints according to the invention can be applied by spray, brush, sprinkling techniques. or any other customary techniques.

At application time, the paints are mixed with crosslinking agents or systems, which promote the polymerization of acrylic or vinylic monomers on unsaturated resins, so that the paint film is cured on the substrate the paint is applied to.

For that purpose, the following crosslinking methods can be used:
(1) By U.V. light, in the presence of light-responsive free-radical initiators, such as, e.g.: IRGACURE 500^{(R)}, IRGACURE 651^{(R)}, IRGACURE 907^{(R)}, by CIBA GEIGY.
(2) By the REDOX method, in the presence of adequate free-radical initiators, and, possibly, aminic accelerators, at room temperature, or at increased temperatures.

The paints according to the present invention display, as compared to the paints based on polyester resins in aqueous dispersion or emulsion, better application characteristics and a more favourable aesthetical appearance. They furthermore display high reactivity to U.V. light, with the preliminary addition of suitable light-responsive initiators, yielding films endowed with high gloss, high surface hardness and strong adhesion to substrates.

The following examples are supplied for the purpose of illustrating the finding of the present invention, without anyway limiting it.

### Example 1

388 g of ethylene glycol, 662 g of diethylene glycol, 187 g of sodium salt of 1,3-dicarboxybenzene-5-sulfonic acid, 495 g of fumaric acid are reacted in the presence of 1.34 g of dibutyltin oxide, in a flask of 3 litres of capacity, equipped with a reflux condenser.

The reaction is carried out at 190°C under a blanketing atmosphere of an inert gas, until an acidity value of 38 mg of KOH/g of resin is reached in the reaction product. The reaction mixture is then cooled down to 160°C and 790 g of fumaric acid is added to it. The temperature is increased to 190°C and the reaction is allowed to continue until an acidity value of 45 mg of KOH/g of resin is reached.

The reaction mixture is cooled down to 180°C, 0.30 g of hydroquinone is dissolved in the resin, and the reaction mixture is cooled. At 120°C, 900 g of butanediol monoacrylate is added.

In that way a mixture of resin in acrylic monomer is obtained, which has the following characteristics:

| | |
|---|---|
| * Brookfield viscosity at 25°C | = 1800 cPs |
| * pH value | = 2.27. |

From the resulting mixture, a paint is prepared, which is constituted as follows:

| | |
|---|---|
| * Resin/acrylic monomer mixture | 75 parts by weight (pbw) |
| * Water | 25 pbw |
| * IRGACURE 651 (at 40% in xylene) | 8 pbw |

The resulting paint shows the following characteristics:

| | |
|---|---|
| * Viscosity at 25°C | 60 cPs |
| * Appearance | Light clear liquid |

A 25-micron film is prepared with said paint, on a glass slide. The film is cured for 3 seconds in an U.V.-light oven with an IST high-pressure mercury lamp of 80 W/cm. The cured film has an AK hardness of 50 seconds.

### Example 2

194 g of ethylene glycol, 726 g of diethylene glycol, 94 g of sodium salt of 1,3-dicarboxybenzene-5-sulfonic acid, 210 g of dimethylolpropionic acid, 1250 g of fumaric acid are reacted in mixture with one another, in a flask of 3 litres of capacity, equipped with a reflux condenser, in the presence of 1.34 g of dibutyltin oxide as the catalyst.

The reaction is carried out by the usual methods, at 175°C under a blanketing atmosphere of nitrogen.

When the reaction mixture has reached an acidity value of 95 mg of KOH/g of resin, the cooling is started.

0.4 g of hydroquinone is added at 180°C. 900 g of butanediol monoacrylate and 120 g of 2-amino-2-methyl-1-propanol at 90% in water are added at 120°C.

The resulting mixture has a Brookfield viscosity at 25°C of 8000 cPs, and a pH value of 3.9.

From said mixture, a paint is prepared, which is composed as follows:

| | |
|---|---|
| * Resin/acrylic monomer mixture | 75 pbw |
| * Water | 25 pbw |
| * IRGACURE 651 (at 40% in toluene) | 8 pbw |

The resulting paint has a Brookfield viscosity at 25°C of 160 cPs, and a clear appearance.

A film of that paint is coated on a glass slide and the film is cured in an U.V.-light oven as in preceding example.

A 30-micron thick film is obtained, which has an AK hardness of 70 seconds.

### Example 3

388 g of ethylene glycol, 662 g of diethylene glycol, 187 g of lithium salt of 1,3-dicarboxybenzene-5-sulfonic acid, 495 g of fumaric acid are reacted in a flask of 3 litres of capacity, equipped with a condenser.

The reaction is carried out in the usual way, under an inert gas atmosphere and with stirring, at 190°C, until an acidity number of 40 is reached. The reaction mixture is cooled down to 160°C and 880 g of fumaric acid and 340 g of trimethylolpropane-diallyl ether are added. The reaction is allowed to proceed at 175°C until an acidity number of 48 is reached, then 0.4 g of hydroquinone is added.

At 120°C, 700 g of hydroxypropyl methacrylate, 200 g of polyethyleneglycol 400 diacrylate and 150 g of 2-amino-2-methyl-1-propanol at 90% in aqueous solution are added.

In that way, a mixture is obtained which has a Brookfield viscosity at 25°C of 12,000 cPs, and a pH value of 5.

From said resin, a paint is prepared, which has the following characteristics:

| | |
|---|---|
| * Resin/acrylic monomer mixture | 75 pbw |
| * Water | 25 pbw |
| * IRGASURE 651 (at 40% in toluene) | 6 pbw |

The resulting paint has a Brookfield viscosity at 25°C of 400 cPs, and a milky appearance.

With that paint, a 50 micron-thick film is prepared on a glass slide and the film is cured in an U.V.-light oven as in preceding example.

The resulting film has an AK hardness of 150 seconds.

## Claims

1. Unsaturated polyester resins containing:
(I) from 1 to 15% by weight of monomeric units with formula: 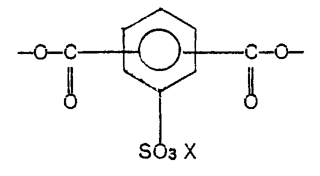 wherein X = Na, Li;
(II) from 0 to 20% by weight of monomeric units with formula: 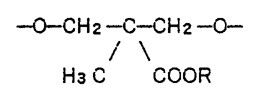 wherein R = H or mono-, di- or tri-alkylammonium group;
(III) from 99 to 65% by weight of monomeric units derived from:
(a) ethylene-glycol and diethylene-glycol, with ethylene-glycol units being contained in amounts comprised within the range of from 0 to 70 mol %, based on the total of ethylene-glycol and diethylene-glycol units;
(b) at least one unsaturated dicarboxy acid selected from the group consisting of fumaric acid, itaconic acid, maleic acid and, possibly, also isophthalic acid and/or phthalic anhydride and/or tetrahydrophthalic anydride, with the monomeric units deriving from unsaturated acids being contained in amounts of at least 2% based on the sum of said units and of the possibly contained isophthalic acid, phthalic anhydride and tetrahydrophtalic anhydride, and the molar ratio of the monomeric units derived from the totality of polycarboxy acids and the monomeric units derived from the totality of polyhydroxy compounds being comprised within the range of from 0.7:1 to 1.5:1.

2. Polyester resins according to claim 1, comprising in their macromolecule end monomeric units with formula:

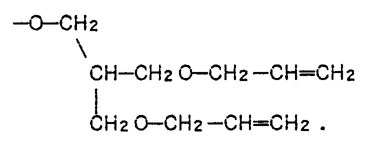

3. Polyester resins according to claims 1 and 2, characterized by acidity values, expressed as mg of KOH/g of resin, comprised within the range of from 20 to 60.

4. Process for preparing the polyester resins according to claim 1, consisting in polycondensing a mixture comprising:
(A) from 1 to 15% by weight of compounds with formula: 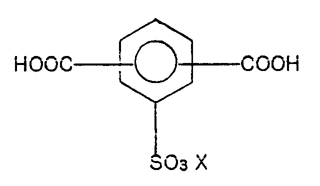 wherein X = Na, Li;
(B) from 0 to 20% by weight of dimethylolpropionic acid;
(C) ethylene-glycol and diethylene-glycol, with amounts of ethylene-glycol, based on the total of ethylene-glycol and diethylene-glycol, comprised within the range of from 0 to 70 mol %;
(D) at least one unsaturated dicarboxy acid selected from the group consisting of fumaric acid, itaconic acid and maleic acid, possibly in mixture with isophthalic acid and/or phthalic anhydride and/or tetrahydrophthalic anhydride, with such an unsaturated acid being contained in amounts of at least 2 mol % based on the total moles of said acids and of possibly contained isophthalic acid and phthalic anhydride and tetrahydrophtalic anhydride, with the molar ratio of the totality of polycarboxy acids to the totality of polyhydroxy compounds is comprised within the range of from 0.7:1 to 1.5:1.

5. Process according to claim 4, in which the molar ratio of the totality of polycarboxy acids to the totality of polyhydroxy acids being comprised within the range of from 1:1 to 1.2:1.

6. Process according to claims 4 and 5, in which the polycondensation mixture comprises from 1 to 30% by weight of propanediallyl ether.

7. Water-soluble paints comprising a mixture of an unsaturated polyester resin according to claims from 1 to 3, with a water-soluble acrylic and/or vinylic monomer polymerizable with said resin, in a ratio by weight, comprised within the range of from 95:5 to 40:60.
